# EUROPÄISCHE PATENTSCHRIFT

(11) **EP 3 736 557 B1**
(45) Veröffentlichungstag und Bekanntmachung des Hinweises auf die Patenterteilung: **04.10.2023**
(21) Anmeldenummer: 20172980.3
(22) Anmeldetag: 05.05.2020
(51) Int. Cl.: G01N 21/21, G01N 21/88, G01B 11/245, B29C 70/38, G01N 21/84

(54) **VERFAHREN UND VORRICHTUNG ZUM DREIDIMENSIONALEN ERFASSEN EINER FASERMATERIALOBERFLÄCHE**
METHOD AND DEVICE FOR THREE-DIMENSIONALLY DETECTING A SURFACE OF A FIBROUS MATERIAL
PROCÉDÉ ET DISPOSITIF DE DÉTECTION TRIDIMENSIONNELLE D'UNE SURFACE DE MATIÈRE FIBREUSE

(30) Priorität: 10.05.2019 DE 102019112312
(43) Veröffentlichungstag der Anmeldung: 11.11.2020
(73) Patentinhaber: Deutsches Zentrum für Luft- und Raumfahrt e.V., 51147 Köln (DE)
(72) Erfinder: Meister, Sebastian, 21680 Stade (DE)
(74) Vertreter: Gramm, Lins & Partner Patent- und Rechtsanwälte PartGmbB

(56) Entgegenhaltungen:
- EP-A1- 2 991 034
- DE-B3-102016 218 390

## Beschreibung

Die Erfindung betrifft ein Verfahren zum dreidimensionalen Erfassen einer Fasermaterial Oberfläche eines auf einem Werkzeug abgelegten Fasermaterials eines Faserverbundwerkstoffes mittels einer Erfassungsvorrichtung. Die Erfindung betrifft ebenso eine Erfassungsvorrichtung hierzu. Außerdem betrifft die Erfindung eine Faserlegeanlage zum Ablegen von Fasermaterial auf einem Werkzeug zur Herstellung eines Faserverbundbauteils.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem bei-spielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werk-zeug abgelegt wird. Bei der sogenannten Fiber Placement Technologie werden bei-spielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfah-ren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der DE 10 2010 015 027 B1 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablegeköpfen das Ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Infundierens des Matrixmaterials bzw. des Aushärtens des Matrixmaterials noch nicht stattgefunden hat. Derartige Faserlaminate bilden somit das Bauteil in einem Rohzustand vor dem Aushärten des Matrixmaterials ab.

Faserlaminate bzw. Faserpreformen für großskaligen Strukturbauteilen, wie bei-spielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit gro-ßem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellagen werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, wo-raus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Ab-stand zwischen 2 Materialbahnen von 1 mm genannt, der qualitativ nur unter Verwendung von Hilfsmitteln und dies auch nur stichpunktartig untersucht werden kann.

Aus diesen Gründen ist eine automatisierte Untersuchung abgelegter Faserlagen zur Erkennung von Ablegefehlern wünschenswert, um sowohl qualitativ als auch quantitativ das Erkennen von Oberflächenfehlern abgelegter Fasermaterialien zu verbessern.

So ist aus der DE 10 2013 104 546 A1 ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden. Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektions-verfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Des Weiteren ist aus der nachveröffentlichten DE 10 2018 124 079 A1 ein Verfahren und eine Vorrichtung zum Ermitteln von Fehlstellen von Fasermaterialien bekannt, bei dem die Fasermaterialoberfläche von vorimprägnierten Fasermaterialien durch mindestens einen Bildsensor einer bildgebenden Aufnahmenvorrichtung in einem Wellenlängenspektrum außerhalb des sichtbaren Spektrums aufgenommen wird. In Abhängigkeit von auf dieser Basis generierten digitalen Bilddaten werden nun Fehlstellen an dem abgelegten, vorimprägnierten Fasermaterialien erkannt.

Es hat sich jedoch gezeigt, dass aufgrund der unterschiedlichen Resonanz verschiedener Fasermaterialien auf unterschiedlichen Wellenlängen Fehlstellen nicht 100 % prozesssicher erkannt werden können. Das komplexe und teilweise geringe Rückstrahlverhalten von Fasermaterialien erschwert dabei die automatisierte Betrachtung und Inspektion, da hierfür eine prozesssichere Erkennung von Fehlstellen auf Fasermaterialoberflächen eine hinreichend qualitative Aufnahme der Fasermaterialoberfläche voraussetzt.

Die DE 10 2016 218 390 B3 offenbart ein Verfahren zum Messen von mechanischen Spannungen in Bauteilen, insbesondere in Bauteilen aus Glasmaterial. Dabei werden Kameras mit Polarisationsfilter verwendet, um das Bauteil aus verschiedenen Richtungen aufzunehmen. Dabei kann basierend auf den Polarisationsinformationen eine zweidimensionale oder dreidimensionale Verteilung der mechanischen Spannungen in dem Objekt ermittelt werden, die ggf. mit einer zweidimensionalen Bildinformationen oder einer dreidimensionalen Volumeninformation verknüpft werden können.

Die EP 2 991 034 A1 offenbart das Erstellen von dreidimensionalen digitalen Bildinformationen aus einem Kamerasystem aus Bilddaten, die aus verschiedenen Richtungen aufgenommen wurden.

Es ist daher Aufgabe der vorliegenden Erfindung ein verbessertes Verfahren sowie Vorrichtung zum Erfassen einer Fasermaterialoberfläche eines auf einem Werkzeug abgelegten Fasermaterials anzugeben, mit dem eine hinreichend qualitative Aufnahme der Fasermaterialoberfläche so erzeugt werden kann, dass hierauf prozesssicher Fehlstellen der Faserpreform erkannt werden können.

Die Aufgabe wird mit dem Verfahren gemäß Anspruch 1, der Erfassungsvorrichtung gemäß Anspruch 11 sowie der Faserlegeanlage gemäß Anspruch 12 gelöst. Vorteilhafte Ausgestaltungen der Erfindung finden sich in den entsprechenden Unteransprüchen.

Gemäß Anspruch 1 wird ein Verfahren zum dreidimensionalen Erfassen einer Fasermaterialoberfläche eines auf einem Werkzeug abgelegten Fasermaterials eines Faserverbundwerkstoffes mittels einer Erfassungsvorrichtung vorgeschlagen, bei dem erfindungsgemäß die Fasermaterialoberfläche mit mindestens zwei polarisationssensitiven Aufnahmesensoriken aufgenommen und entsprechende Messdaten generiert werden. Basierend auf den so aufgenommenen polarisationsabhängigen Messdaten werden dann dreidimensionale Oberflächendaten der Fasermaterialoberfläche als dreidimensionales digitales Abbild der realen Fasermaterialoberfläche mithilfe einer Datenverarbeitungseinheit erstellt, sodass sich ein digitales, dreidimensionales Oberflächenmodell der zu erfassenden Fasermaterialoberfläche ergibt.

Hierfür wird die von zumindest einem Teil der Fasermaterialoberfläche reflektierte Strahlung (elektromagnetische Strahlung, beispielsweise im sichtbaren oder nicht sichtbaren Spektrum des Lichtes) mittels einer ersten polarisationssensitiven Aufnahmesensorik aus einer ersten Aufnahmerichtung aufgenommen und entsprechende erste polarisationsabhängige Messdaten in Abhängigkeit von der erfassten reflektierten Strahlung generiert. Derartige polarisationsabhängige Messdaten können bei-spielsweise digitale Bilddaten sein.

Parallel dazu wird die von diesem Teil der Fasermaterialoberfläche reflektierte Strahlung mittels einer wenigstens zweiten polarisationssensitiven Aufnahmesensorik aus einer zweiten Aufnahmerichtung aufgenommen und entsprechende zweite polarisationsabhängige Messdaten in Abhängigkeit von der erfassten reflektierten Strahlung generiert. Die erste Aufnahmerichtung der ersten polarisationssensitiven Aufnahmesensorik ist dabei von der zweiten Aufnahmerichtung der zweiten polarisationssensitiven Aufnahmesensorik verschieden, sodass ein und derselben Teil der Fasermaterialoberfläche aus wenigstens zwei voneinander verschiedenen Aufnahmerichtungen durch jeweils eine polarisationssensitive Aufnahmesensorik aufgenommen wird.

Basierend auf den polarisationsabhängigen Messdaten der ersten Aufnahmerichtung und der zweiten Aufnahmerichtung können nun dreidimensionale Oberflächendaten der Fasermaterialoberfläche automatisiert durch eine Datenverarbeitungseinheit erstellt werden, sodass sich, erfindungsgemäß, ein dreidimensionales digitales Abbild der realen Fasermaterialoberfläche ergibt. Diese dreidimensionalen Oberflächendaten können nun in einem digitalen Datenspeicher zu Dokumentationszwecken hinterlegt werden. Diese dreidimensionalen Oberflächendaten können aber auch die Grundlage für die Erkennung von Fehlstellen bilden, wie später noch gezeigt wird.

Der Erfinder hat hierbei erkannt, dass mithilfe von mehreren polarisationssensitiven Aufnahmesensoriken eine dreidimensionale Abbildung der Fasermaterialoberfläche erzeugt werden kann, aus der sich dann automatisiert Fehlstellen erkennen lassen. Speziell matt schwarzes Kohlefasermaterial sowie stark transluzentes Glassfasermaterial können durch die Multi-Kamera-Anordnung zur polarisationsabhängigen Aufnahme der Fasermaterialoberfläche dahingehend prozesssicher und hinreichend detailliert erfasst werden, dass sich hieraus auch kleinste Fehlstellen erkennen lassen. Gerade vor dem Hintergrund, dass industrielle eingesetzte Hochleistungs-Fasermaterialien einzelne Filamente haben, die in einem Abstand von etwa 5 µm bis 8 µm nebeneinanderliegen, war es überraschend, dass durch die Multi-Kamera-Anordnung zur polarisationsabhängigen Aufnahme der Fasermaterialoberfläche ein dreidimensionales digitales Abbild der Oberfläche geschaffen werden kann, welche sich als Grundlage zur Fehlererkennung eignet.

Gemäß einer Ausführungsform ist vorgesehen, dass mehr als zwei polarisationssensitive Aufnahmesensoriken vorgesehen sind, die jeweils in voneinander verschiedenen Aufnahmerichtungen die reflektierte Strahlung von der Fasermaterialoberfläche aufnehmen. Jeder dieser Aufnahmesensoriken generiert dabei eigene polarisationsabhängige Messdaten, aus denen dann mittels der Datenverarbeitungseinheit die dreidimensionalen Oberflächendaten erstellt werden. Es hat sich dabei gezeigt, dass mit zunehmender Anzahl der polarisationssensitiven Aufnahmesensoriken die Genauigkeit der erstellten dreidimensionalen Oberflächendaten zunimmt.

Gemäß einer weiteren Ausführungsform ist vorgesehen, dass mittels mindestens einer elektromagnetischen Strahlungsquelle der Erfassungsvorrichtung eine elektromagnetische Strahlung in Richtung der Materialoberfläche emittiert wird. Durch das Bestrahlen (beispielsweise beleuchten mit Licht im sichtbaren Spektrum, vorzugsweise unpolarisiert) der Fasermaterialoberfläche mit elektromagnetischen Strahlen kann die Intensität der reflektierten Strahlung, die von den polarisationssensitiven Aufnahmesensoriken aufgenommen wird, erhöht und verbessert werden.

Gemäß einer vorteilhaften Ausführungsform ist vorgesehen, dass die elektromagnetischen Strahlungen im Wellenlängenspektrum des sichtbaren Lichtes, im Wellenlängenspektrum der Ultraviolettstrahlung und/oder im Wellenlängenspektrum der Infrarotstrahlung emittiert wird. So hatte sich als vorteilhaft herausgestellt, wenn eine Fasermaterialoberfläche, die aus Kunststofffasern besteht, mit weißem Licht bestrahlt wird.

Gemäß einer Ausführungsform ist vorgesehen, dass mittels der Datenverarbeitungseinheit korrespondierende Bereiche bzw. Abschnitte in den jeweiligen polarisationsabhängigen Messdaten der polarisationssensitiven Aufnahmesensoriken erkannt und in Abhängigkeit von den erkannten korrespondierenden Bereichen bzw. Abschnitten die polarisationsabhängigen Messdaten zueinander ausgerichtet werden, sodass die einzelnen Messpunkte in den ersten polarisationsabhängigen Messdaten den einzelnen Messpunkten in den zweiten polarisationsabhängigen Messdaten entsprechen. Das Aufbringen eines Specklemusters ist somit nicht erforderlich.

Es ist daher vorteilhaft, wenn auf die Fasermaterialoberfläche kein Specklemuster aufgetragen wird.

Durch die Betrachtung verschiedener Polarisationsinformationen in den aufgenommenen polarisationsabhängigen Messdaten können charakteristische Merkmale, die eindeutig einem entsprechenden Messpunkt zugeordnet werden können, identifiziert werden, wobei diese charakteristischen Merkmale in jeder der aufgenommenen polarisationsabhängigen Messdaten enthalten ist. Diese charakteristischen Merkmale in den Messdaten bilden dabei entsprechende korrespondierende Bereiche, mit deren Hilfe die einzelnen Messdaten zueinander ausgerichtet werden können. Hierdurch werden die Aufnahmesensoriken während der Durchführung des Verfahrens so kalibriert, dass sie alle denselben Betrachtungspunkt haben. Dieser gemeinsame Betrachtungspunkt wird dabei direkt aus den Sensoreingangsdaten ermittelt, sodass keine stationäre Abstandsebene betrachtet werden muss.

Es hat sich gezeigt, dass sich in den aufgenommenen polarisationsabhängigen Messdaten in der Regel eine Vielzahl von derartigen korrespondierenden Bereichen mit charakteristischen Merkmalen der Fasermaterialoberfläche erkennen lassen, mit denen die einzelnen polarisationsabhängigen Messdaten zueinander ausgerichtet werden können, sodass sich die einzelnen Messpunkte der Messdaten jeweils einander entsprechen.

Hierbei ist es vorteilhaft, wenn Ablagerungen von Matrixmaterial auf der Fasermaterialoberfläche, Filamente des Fasermaterials und/oder Fehlstellen des Fasermaterials als korrespondierende Bereiche (charakteristische Merkmale) in den jeweiligen polarisationsabhängigen Messdaten erkannt werden.

Gemäß einer Ausführungsform ist vorgesehen, dass jede polarisationssensitive Aufnahmesensorik eine Mehrzahl von polarisationsabhängigen Aufnahmekanälen hat, die jeweils die reflektierte Strahlung für eine vorgegebene Polarisation aufnehmen. Die polarisationsabhängigen Messdaten werden dann aus den Aufnahmen der einzelnen polarisationsabhängigen Aufnahmekanälen generiert, indem die Aufnahmedaten der einzelnen Aufnahmekanäle miteinander fusioniert werden. So ist es bei-spielsweise denkbar, dass die polarisationssensitive Aufnahmesensorik drei Aufnahmekanäle hat, wobei der erste Aufnahmekanal die Fasermaterialoberfläche mit einer 0° Polarisation, der zweite Aufnahmekanal die Fasermaterialoberfläche mit einer 90° Polarisation und der dritte Aufnahmekanal die Fasermaterialoberfläche mit einer 135° Polarisation aufnimmt.

Bei einer solchen polarisationssensitiven Aufnahmesensorik kann es sich beispielsweise um eine Polarisationskamera handeln, mit der die Fasermaterialoberfläche in verschiedenen Polarisationen aufgenommen werden kann.

Gemäß einer Ausführungsform ist vorgesehen, dass Fehlstellen an der Fasermaterialoberfläche und/oder dem Fasermaterial aus den dreidimensionalen Oberflächendaten mittels der Datenverarbeitungseinheit erkannt werden. So lassen sich insbesondere Faserlegefehler, die beim Ablegen der Fasermaterialien auf einem Werkzeug durch eine Faserlegeanlage entstehen können, sehr gut aus den dreidimensionalen Oberflächendaten automatisiert erkennen. Darüber hinaus lassen sich derartige Faserlegefehler auch im Nachgang vermessen und können so hinsichtlich der vorgegebenen Toleranzen bewertet werden. Denn nicht jeder Fehler muss zu einem Ausschuss des Bauteils oder zu einer Korrektur führen. Darüber hinaus wurde erkannt, dass sich insbesondere Materialfehler des Fasermaterials, insbesondere der Filamente, aus den dreidimensionalen Oberflächendaten erkennen lassen, die dann ebenfalls vermessen und gegebenenfalls hinsichtlich der Toleranzen bewertet werden können.

Weitere Fehlstellen können beispielsweise Stufen, Überlappungen, Spalten, Verwerfungen, Welligkeiten, Lufteinschlüsse, Fremdkörper, Materialablösungen, Materialansammlungen und/oder Materialfehler sein.

Gemäß einer Ausführungsform ist vorgesehen, dass während der Aufnahme der Fasermaterialoberfläche durch die polarisationssensitiven Aufnahmesensoriken diese gegenüber der Fasermaterialoberfläche bereits abgelegter Fasermaterialien verfahren werden und/oder das abgelegte Fasermaterial gegenüber den polarisationssensitiven Aufnahmesensoriken bewegt wird.

Besonders vorteilhaft ist es, wenn die polarisationssensitiven Aufnahmesensoriken der Erfassungsvorrichtung mit einem Faserlegekopf einer Faselegeanlage, insbesondere im Nachlauf des Faserlegekopfes, während des Ablegens des Fasermaterials gegenüber dem bereits abgelegten Fasermaterial bewegt wird. Hierfür sind die Aufnahmesensoriken an dem Faserlegekopf fest angeordnet und werden demzufolge beim Bewegen des Faserlegekopfes, beispielsweise mittels einer Robotereinheit, ebenfalls gegenüber dem Werkzeug und dem bereits abgelegten Fasermaterial verfahren, wobei während des Ablegens des Fasermaterials mittels des Faserlegekopfes die Fasermaterialoberfläche dreidimensionalen Erfassen und die dreidimensionalen Oberflächendaten der Fasermaterialoberfläche erstellt werden.

Es hat sich gezeigt, dass das erfindungsgemäße Verfahren während des automatisierten, kontinuierlichen Ablegens von Fasermaterial auf einer Werkzeugoberfläche durchführbar ist, um die Fasermaterialoberfläche dreidimensional zu erfassen und Fehler bei der Faserablage bzw. Materialfehler detektieren zu können.

Die Aufgabe wird im Übrigen auch mit der Erfassungsvorrichtung gemäß Anspruch 11 erfindungsgemäß gelöst, wobei die Erfassungsvorrichtung eine erste polarisationssensitive Aufnahmesensorik und wenigstens eine zweite polarisationssensitive Aufnahmesensorik hat sowie eine Datenverarbeitungseinheit. Die Erfassungsvorrichtung ist nun so ausgebildet, das zur Durchführung des vorstehend beschriebenen erfindungsgemäßen Verfahrens ausgebildet ist.

Die Aufgabe wird im Übrigen auch mit der Faserlegeanlage zum Ablegen von Fasermaterial auf einem Werkzeug zur Herstellung eines Faserverbundbauteils gemäß Anspruch 12 erfindungsgemäß gelöst, wobei die Faserlegeanlage eine Erfassungsvorrichtung gemäß Anspruch 11 hat.

Die gattungsgemäße Faserlegeanlage kann dabei mindestens einer Faserlegeeinheit aufweisen, die eine Robotereinheit hat, an dem als Endeffektor ein Faserlegekopf angeordnet ist. Dem Faserlegekopf wird dabei kontinuierlich ein Fasermaterial zugeführt, das dann mithilfe des Faserlegekopfes auf dem Werkzeug zur Herstellung des Faserverbundbauteils abgelegt wird. Vorzugsweise sind die Aufnahmesensoriken dabei an dem Faserlegekopf fest angeordnet.

Die Erfindung wird anhand der beigefügten Figuren beispielhaft näher erläutert. Es zeigen:
- Figur 1: schematische Darstellung der erfindungsgemäßen Erfassungsvorrichtung;
- Figur 2: schematische Darstellung der Aufnahme eines Multi-Kamera-Systems.

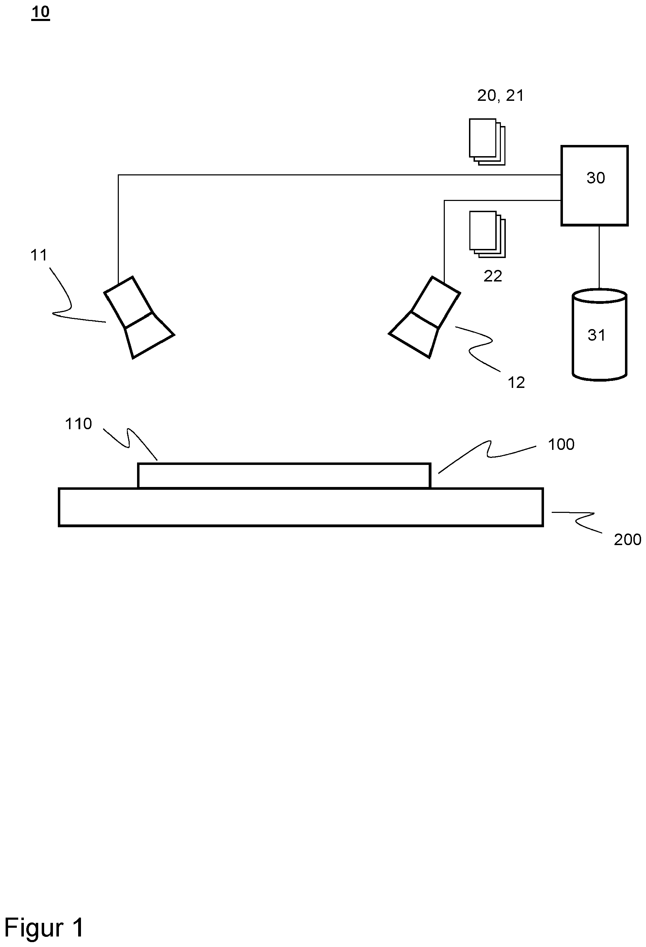

- Figur 1: zeigt in einer schematisch stark vereinfachten Darstellung ein Ausführungsbeispiel einer erfindungsgemäßen
Erfassungsvorrichtung 10, mit der eine Fasermaterialoberfläche 110 eines Fasermaterials 100, welches auf einem Werkzeug 200 abgelegt ist, dreidimensional erfasst werden soll.

Die Erfassungsvorrichtung 10 hat eine erste polarisationssensitive Aufnahmesensorik 11 und wenigstens eine zweite polarisationssensitive Aufnahmesensorik 12, die in Richtung der Fasermaterialoberfläche 110 des Fasermaterials 100 ausgerichtet sind. Mithilfe der beiden Aufnahmesensoriken 11 und 12 können polarisationsabhängige Messdaten 20 der Fasermaterialoberfläche 110 aufgenommen werden. Bei den beiden Aufnahmesensoriken 11 und 12 kann es sich demnach vorteilhafterweise um sogenannte Polarisationskamera handeln, die zur Aufnahme der Fasermaterialoberfläche 110 für verschiedene Polarisationen der elektromagnetischen Strahlung ausgebildet sind.

Die erste Aufnahmesensorik 11 erzeugt dabei erste polarisationsabhängige Messdaten 21, während die zweite Aufnahmesensorik 12 zweite polarisationsabhängige Messdaten 22 generierten. Im Ausführungsbeispiel der Figur 1 sind die Aufnahmesensoriken 11 und 12 so ausgebildet, dass sie getrennt für die verschiedenen Polarisationskanäle entsprechenden Messdaten generieren, die dann zu einem gemeinsamen Messdatensatz 21 und 22 fusioniert werden.

Die durch die Aufnahmesensoriken 11 und 12 generierten ersten Messdaten 21 und zweite Messdaten 22 werden dann an eine Datenverarbeitungseinheit 30 übertragen, wo sie weiter verarbeitet werden. Basierend auf den übertragenen Messdaten 21 und 22 werden nun dreidimensionale Oberflächendaten der erfassten Fasermaterialoberfläche 110 erstellt, wobei diese dreidimensionalen Oberflächendaten die Fasermaterialoberfläche 110 in Art eines digitalen 3D-Modells abbilden. Erfindungsgemäß wird ein dreidimensionales digitales Abbild der realen Fasermaterialoberfläche erstellt.

Diese so erstellten dreidimensionalen Oberflächendaten können nun in einem digitalen Datenspeicher 31 permanent hinterlegt werden, um sie beispielsweise für spätere Dokumentationszwecken aufzubewahren.

Parallel dazu ist die Datenverarbeitungseinheit 30 eingerichtet, basierend auf den erstellten dreidimensionalen Oberflächendaten durch eine analytische Bildbetrachtung entsprechende Fehlstellen der Fasermaterialoberfläche 110 oder des Fasermaterials 100 zu erkennen. Insbesondere Materialfehler des Fasermaterials, beispielsweise an den Filamenten, lassen sich aus den dreidimensionalen Oberflächendaten erkennen.

Um die dreidimensionalen Oberflächendaten aus den einzelnen Messdaten 21 und 22 der beiden Aufnahmesensoriken 11 und 12 herstellen zu können, müssen die Messdaten 21 und 22 miteinander fusioniert werden. Sofern die beiden Aufnahmesensoriken 11 und 12 nicht so angeordnet sind, dass sie immer auf denselben Betrachtungspunkt kalibriert sind, müssen die Messdaten 21 und 22 so zueinander ausgerichtet werden, dass die einzelnen Messpunkte in den ersten Messdaten 21 den einzelnen Messpunkten in den zweiten Messdaten 22 entsprechen. Hierdurch werden die Messdaten 21 und 22 auf einem denselben Betrachtungspunkt referenziert.

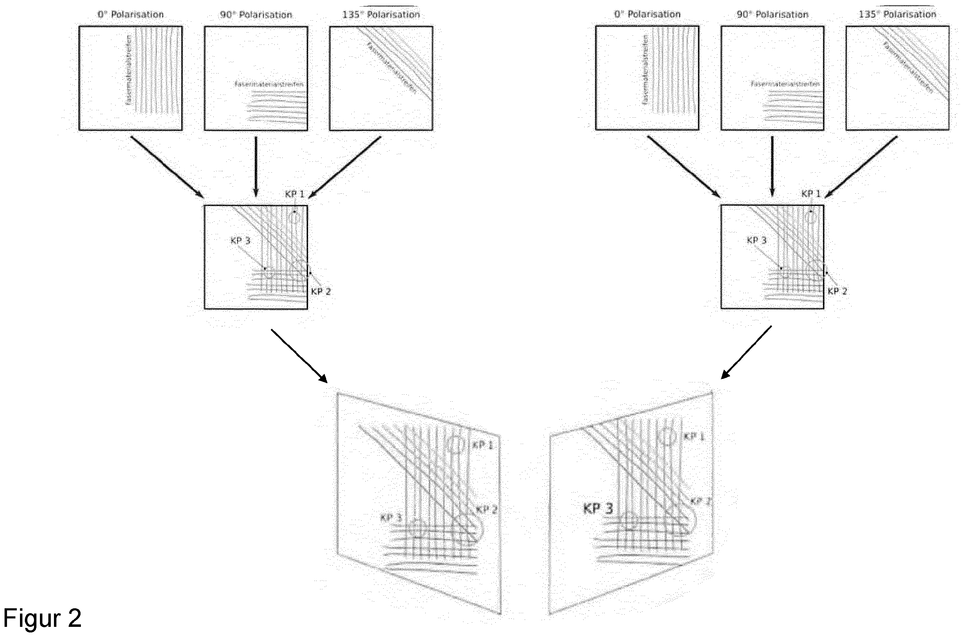

Hierfür ist es notwendig, charakteristische Merkmale in den Messdaten 21 und 22 zu finden, anhand derer dann die Messdaten 21 und 22 zueinander ausgerichtet werden können. Solche charakteristischen Merkmale bilden dabei korrespondierende Bereiche, die sich sowohl in den ersten Messdaten 21 als auch in den zweiten Messdaten 22 finden lassen. Dieses Vorgehen ist schematisch in Figur 2 gezeigt.

Von der Aufnahmesensorik werden dabei insgesamt 3 Polarisationskanäle bereitgestellt, bei denen die Fasermaterialoberfläche mit einer 0° Polarisation, 90° Polarisation sowie 135° Polarisation aufgenommen wurden. In jedem dieser Polarisationskanäle lassen sich dabei charakteristische Merkmale KPₙ finden, die sowohl in den ersten Messdaten 21 als auch in den zweiten Messdaten 22 enthalten sind. Da diese charakteristischen Merkmale KPₙ derart eindeutig sind, dass sie ohne Zweifel in beiden Messdaten 21 und 22 auffindbar sind, können die Messdaten basierend auf diesen charakteristischen Merkmalen zueinander ausgerichtet werden, sodass sich die Messpunkte der einzelnen Messdaten 21 und 22 entsprechen. Damit kann jeder Messpunkt in den ersten Messdaten 21 dem korrespondierenden Messpunkt in den zweiten Messdaten 22 zugeordnet werden, sodass die Informationen an diesen Messpunkten zur Erstellung der dreidimensionalen Oberflächendaten genutzt werden können.

Durch die Verwendung von Polarisationskamera können dabei charakteristische Merkmale der Fasern bzw. Filamente in jeder Polarisation erkannt werden, sodass sich dieses erfindungsgemäße Verfahren auch bei der Ablage von trockenen Fasermaterialien eignet. Denn durch die Verwendung der Polarisationskameras werden eindeutige charakteristische Merkmale der Fasern bzw. Filamente des Fasermaterials sichtbar, die sich dann für die Ausrichtung der Messdaten eignen.

### Bezugszeichenliste

- 10: Erfassungsvorrichtung
- 11: erste polarisationssensitive Aufnahmesensorik
- 12: zweite polarisationssensitive Aufnahmesensorik
- 20: Messdaten
- 21: erste polarisationsabhängige Messdaten
- 22: zweite polarisationsabhängige Messdaten
- 30: Datenverarbeitungseinheit
- 31: digitaler Datenspeicher
- 100: Fasermaterial
- 110: Fasermaterialoberfläche
- 200: Werkzeug

## Patentansprüche

1. Verfahren zum dreidimensionalen Erfassen einer Fasermaterialoberfläche (110) eines auf einem Werkzeug (200) abgelegten Fasermaterials (100) eines Faserverbundwerkstoffes mittels einer Erfassungsvorrichtung (10), wobei das Verfahren die folgenden Schritte umfasst:
- Aufnehmen der von zumindest einem Teil der Fasermaterialoberfläche (110) reflektierten Strahlung mittels einer ersten polarisationssensitiven Aufnahmesensorik (11) aus einer ersten Aufnahmerichtung und Generieren von ersten polarisationsabhängigen Messdaten (21) in Abhängigkeit von der erfassten reflektierten Strahlung,
- Aufnehmen der von zumindest dem einen Teil der Fasermaterialoberfläche (110) reflektierten Strahlung mittels wenigstens einer zweiten polarisationssensitiven Aufnahmesensorik (12) aus einer von der ersten Aufnahmerichtung verschiedenen zweiten Aufnahmerichtung und Generierten von zumindest zweiten polarisationsabhängigen Messdaten (22) in Abhängigkeit von den erfassten reflektierten Strahlungen, und
- Erstellen von dreidimensionalen Oberflächendaten der Fasermaterialoberfläche (110) als dreidimensionales digitales Abbild der realen Fasermaterialoberfläche in Abhängigkeit von den ersten polarisationsabhängigen Messdaten (21) und den zumindest zweiten polarisationsabhängigen Messdaten (22) mittels einer Datenverarbeitungseinheit (30).

2. Verfahren nach Anspruch 1, wobei mehr als zwei polarisationssensitive Aufnahmesensoriken (11, 12) aus jeweils voneinander verschiedenen Aufnahmerichtungen die reflektierte Strahlung aufnehmen und jeweils eigene polarisationsabhängige Messdaten (21, 22) generieren, aus denen dann mittels der Datenverarbeitungseinheit (30) die dreidimensionalen Oberflächendaten erstellt werden.

3. Verfahren nach Anspruch 1 oder 2, wobei mittels mindestens einer elektromagnetischen Strahlungsquelle der Erfassungsvorrichtung (10) eine elektromagnetische Strahlung in Richtung der Materialoberfläche emittiert wird.

4. Verfahren nach einem der vorhergehenden Ansprüche, wobei mittels der Datenverarbeitungseinheit (30) korrespondierende Bereiche in den jeweiligen polarisationsabhängigen Messdaten (21, 22) der polarisationssensitiven Aufnahmesensoriken (11, 12) erkannt und in Abhängigkeit von den erkannten korrespondierenden Bereichen die polarisationsabhängigen Messdaten (21, 22) zueinander ausgerichtet werden, so dass die einzelnen Messpunkte in den ersten polarisationsabhängigen Messdaten (21) den einzelnen Messpunkten in den zweiten polarisationsabhängigen Messdaten (22) entsprechen.

5. Verfahren nach Anspruch 4, wobei Ablagerungen von Matrixmaterial auf der Fasermaterialoberfläche (110), Filamente des Fasermaterials (100) und/oder Fehlstellen als korrespondierende Bereiche in den jeweiligen polarisationsabhängigen Messdaten (21, 22) erkannt werden.

6. Verfahren nach einem der vorhergehenden Ansprüche, wobei jede polarisationssensitive Aufnahmesensorik (11, 12) eine Mehrzahl von polarisationsabhängigen Aufnahmekanälen hat, die jeweils die reflektierte Strahlung für eine vorgegebene Polarisation aufnehmen, wobei die polarisationsabhängigen Messdaten (21, 22) aus den Aufnahmen der einzelnen polarisationsabhängigen Aufnahmekanäle generiert werden.

7. Verfahren nach einem der vorhergehenden Ansprüche, wobei Fehlstellen an der Fasermaterialoberfläche (110) und/oder dem Fasermaterial (100) aus den dreidimensionalen Oberflächendaten mittels der Datenverarbeitungseinheit (30) erkannt werden.

8. Verfahren nach Anspruch 7, wobei Stufen, Überlappungen, Spalten, Verwerfungen, Welligkeiten, Lufteinschlüsse, Fremdkörper, Materialablösungen, Materialansammlungen und/oder Materialfehler als Fehlstellen erkannt werden.

9. Verfahren nach einem der vorhergehenden Ansprüche, wobei während der Aufnahme der Fasermaterialoberfläche (110)
- die polarisationssensitiven Aufnahmesensoriken (11, 12) der Erfassungsvorrichtung (10) gegenüber der Fasermaterialoberfläche (110) bereits abgelegter Fasermaterialen (100) verfahren werden,
und/oder
- das abgelegte Fasermaterial (100) gegenüber den polarisationssensitiven Aufnahmesensoriken (11, 12) bewegt wird.

10. Verfahren nach einem der vorhergehenden Ansprüche, wobei die polarisationssensitiven Aufnahmesensoriken (11, 12) der Erfassungsvorrichtung (10) mit einem Faserlegekopf einer Faserlegeanlage während des Ablegens des Fasermaterials (100) gegenüber dem bereits abgelegten Fasermaterial (100) bewegt wird.

11. Erfassungsvorrichtung (10) mit einer ersten polarisationssensitiven Aufnahmesensorik (11) und wenigstens einer zweiten polarisationssensitiven Aufnahmesensorik (12) und einer Datenverarbeitungseinheit (30), **dadurch gekennzeichnet, dass** die Erfassungsvorrichtung (10) zur Durchführung des Verfahrens nach einem der vorhergehenden Ansprüche eingerichtet ist.

12. Faserlegeanlage zum Ablegen von Fasermaterial (100) auf einem Werkzeug (200) zur Herstellung eines Faserverbundbauteils, wobei die Faserlegeanlage eine Erfassungsvorrichtung (10) gemäß Anspruch 11 hat.

## Claims

1. A method of three-dimensionally detecting a fiber material surface (110) of a fiber material (100) of a fiber composite material deposited on a tool (200) by means of a detection device (10), the method comprising the steps of:
- detecting radiation reflected from at least a portion of the fiber material surface (110) by means of a first polarization-sensitive detection sensor (11) from a first detection direction and generating first polarization-dependent measurement data (21) as a function of the detected reflected radiation,
- detecting the radiation reflected from at least said portion of the fiber material surface (110) by means of at least a second polarization-sensitive detection sensor (12) from a second detection direction different from the first detection direction and generating at least second polarization-dependent measurement data (22) as a function of the detected reflected radiation, and
- creating three-dimensional surface data of the fiber material surface (110) as a three-dimensional digital image of the real fiber material surface as a function of the first polarization-dependent measurement data (21) and the at least second polarization-dependent measurement data (22) by means of a data processing unit (30).

2. Method according to claim 1, wherein more than two polarization-sensitive detection sensors (11, 12) detect the reflected radiation from detection directions different from one another in each case and generate their own polarization-dependent measurement data (21, 22) in each case, from which the three-dimensional surface data are then generated by means of the data processing unit (30).

3. Method according to claim 1 or 2, wherein by means of at least one electromagnetic radiation source of the detection device (10) an electromagnetic radiation is emitted in the direction of the material surface.

4. Method according to any one of the preceding claims, wherein by means of the data processing unit (30) corresponding regions in the respective polarization-dependent measurement data (21, 22) of the polarization-sensitive detection sensors (11, 12) are detected and, as a function of the detected corresponding regions, the polarization-dependent measurement data (21, 22) are aligned with one another, so that the individual measurement points in the first polarization-dependent measurement data (21) correspond to the individual measurement points in the second polarization-dependent measurement data (22).

5. The method according to claim 4, wherein deposits of matrix material on the fiber material surface (110), filaments of the fiber material (100) and/or defects are detected as corresponding regions in the respective polarization-dependent measurement data (21, 22).

6. A method according to any one of the preceding claims, wherein each polarization-sensitive detection sensor (11, 12) has a plurality of polarization-dependent detection channels each detecting the reflected radiation for a predetermined polarization, wherein the polarization-dependent measurement data (21, 22) is generated from the detections of the individual polarization-dependent detection channels.

7. Method according to any one of the preceding claims, wherein defects on the fiber material surface (110) and/or the fiber material (100) are detected from the three-dimensional surface data by means of the data processing unit (30).

8. Method according to claim 7, wherein steps, overlaps, gaps, warps, waviness, air inclusions, foreign bodies, material detachments, material accumulations and/or material defects are detected as defects.

9. Method according to any one of the preceding claims, wherein during the detection of the fiber material surface (110)
- the polarization-sensitive detection sensors (11, 12) of the detection device (10) are moved relative to the fiber material surface (110) of already deposited fiber materials (100),
and/or
- the deposited fiber material (100) is moved relative to the polarization-sensitive detection sensors (11, 12).

10. Method according to any one of the preceding claims, wherein the polarization-sensitive detection sensors (11, 12) of the detection device (10) are moved with a fiber laying head of a fiber laying systemrelative to the already laid fiber material (100) during the laying of the fiber material (100).

11. A detection device (10) comprising a first polarization-sensitive detection sensor (11) and at least one second polarization-sensitive detection sensor (12) and a data processing unit (30), **characterized in that** the detection device (10) is arranged for carrying out the method according to one of the preceding claims.

12. A fiber laying system for depositing fiber material (100) on a tool (200) to produce a fiber composite component, wherein the fiber laying system has a detection device (10) according to claim 11.

## Revendications

1. Procédé de détection tridimensionnelle d'une surface de matériau fibreux (110) d'un matériau fibreux (100) d'un matériau composite à fibres, déposé sur un outil (200), au moyen d'un dispositif de détection (10), le procédé comprenant les étapes suivantes consistant à :
- enregistrer le rayonnement réfléchi par au moins une partie de la surface de matériau fibreux (110) au moyen d'un premier capteur d'enregistrement (11) sensible à la polarisation à partir d'une première direction d'enregistrement, et générer des premières données de mesure (21) dépendantes de la polarisation, en fonction du rayonnement réfléchi enregistré,
- enregistrer le rayonnement réfléchi par au moins ladite partie de la surface de matériau fibreux (110) au moyen d'au moins un deuxième capteur d'enregistrement (12) sensible à la polarisation à partir d'une deuxième direction d'enregistrement différente de la première direction d'enregistrement, et générer au moins des deuxièmes données de mesure (22) dépendantes de la polarisation, en fonction des rayonnements réfléchis enregistrés, et
- créer des données de surface tridimensionnelles de la surface de matériau fibreux (110) en tant qu'image numérique tridimensionnelle de la surface réelle du matériau fibreux en fonction des premières données de mesure (21) dépendantes de la polarisation et desdites au moins deuxièmes données de mesure (22) dépendantes de la polarisation au moyen d'une unité de traitement de données (30).

2. Procédé selon la revendication 1,
dans lequel plus de deux capteurs d'enregistrement (11, 12) sensibles à la polarisation enregistrent chacun le rayonnement réfléchi à partir de directions d'enregistrement différentes l'une de l'autre et génèrent chacun leurs propres données de mesure (21, 22) dépendantes de la polarisation, à partir desquelles les données de surface tridimensionnelles sont alors créées au moyen de l'unité de traitement de données (30).

3. Procédé selon la revendication 1 ou 2,
dans lequel un rayonnement électromagnétique est émis en direction de la surface du matériau au moyen d'au moins une source de rayonnement électromagnétique du dispositif de détection (10).

4. Procédé selon l'une des revendications précédentes,
dans lequel, au moyen de l'unité de traitement de données (30), des zones correspondantes dans les données de mesure respectives (21, 22) dépendantes de la polarisation des capteurs d'enregistrement (11, 12) sensibles à la polarisation sont reconnues, et, en fonction des zones correspondantes reconnues, les données de mesure (21, 22) dépendantes de la polarisation sont alignées les unes par rapport aux autres, de sorte que les différents points de mesure dans les premières données de mesure (21) dépendantes de la polarisation correspondent aux différents points de mesure dans les deuxièmes données de mesure (22) dépendantes de la polarisation.

5. Procédé selon la revendication 4,
dans lequel des dépôts de matériau de matrice sur la surface de matériau fibreux (110), des filaments du matériau fibreux (100) et/ou des imperfections sont reconnu(e)s comme des zones correspondantes dans les données de mesure respectives (21, 22) dépendantes de la polarisation.

6. Procédé selon l'une des revendications précédentes,
dans lequel chaque capteur d'enregistrement (11, 12) sensible à la polarisation possède une pluralité de canaux d'enregistrement dépendants de la polarisation, qui enregistrent chacun le rayonnement réfléchi pour une polarisation donnée, les données de mesure (21, 22) dépendantes de la polarisation étant générées à partir des enregistrements des différents canaux d'enregistrement dépendants de la polarisation.

7. Procédé selon l'une des revendications précédentes,
dans lequel des imperfections de la surface de matériau fibreux (110) et/ou du matériau fibreux (100) sont reconnues à partir des données de surface tridimensionnelles au moyen de l'unité de traitement de données (30).

8. Procédé selon la revendication 7,
dans lequel des gradins, des chevauchements, des fentes, des gauchissements, des ondulations, des inclusions d'air, des corps étrangers, des décollements de matière, des accumulations de matière et/ou des défauts de matière sont reconnus comme des imperfections.

9. Procédé selon l'une des revendications précédentes,
dans lequel, pendant l'enregistrement de la surface de matériau fibreux (110)
- les capteurs d'enregistrement (11, 12) sensibles à la polarisation du dispositif de détection (10) sont déplacés par rapport à la surface de matériau fibreux (110) de matériaux fibreux (100) déjà déposés,
et/ou
- le matériau fibreux déposé (100) est déplacé par rapport aux capteurs d'enregistrement (11, 12) sensibles à la polarisation.

10. Procédé selon l'une des revendications précédentes,
dans lequel, pendant la dépose du matériau fibreux (100), les capteurs d'enregistrement (11, 12) sensibles à la polarisation du dispositif de détection (10) sont déplacés par rapport au matériau fibreux déjà déposé (100) avec une tête de pose de fibres d'une installation de pose de fibres.

11. Dispositif de détection (10) comprenant un premier capteur d'enregistrement (11) sensible à la polarisation et au moins un deuxième capteur d'enregistrement (12) sensible à la polarisation et une unité de traitement de données (30),
**caractérisé en ce que** le dispositif de détection (10) est conçu pour mettre en oeuvre le procédé selon l'une des revendications précédentes.

12. Installation de pose de fibres destinée à déposer un matériau fibreux (100) sur un outil (200) pour la fabrication d'une pièce en matériau composite à fibres, l'installation de pose de fibres comprenant un dispositif de détection (10) selon la revendication 11.
